# EUROPEAN PATENT APPLICATION

(11) **EP 1 926 304 A1**
(43) Date of publication of application: **28.05.2008**
(21) Application number: 06124642.7
(22) Date of filing: 23.11.2006
(51) Int. Cl.: H04N 5/00, H04L 29/06

(54) **Recycle of the used mobile phones in digital set-top boxes**

(71) Applicant: Hyundai Digital Technology Holland B.V., 3012 NJ Rotterdam (NL)
(72) Inventor: Bademli, Mumtaz, 3012 NJ, Rotterdam (NL)
(74) Representative: Iskender, Ibrahim

(57) **Abstract**

The invention relates to the set-top boxes (23) enabling us to receive the digital radio and television broadcasts by using the existing analog receivers, and it relates to the use of the used mobile phones capable of data communication inside said set-top box as two way data communication path in order to utilize the interactive digital radio and television services provided against fee payment and, in case the relevant services are provided, the service of the asymmetric wide band internet access and the internet phone services known under the name VOIP.

## Description

### Technical Field

The invention relates to the set-top boxes developed to convert the digital broadcast signals to analog audio and video signals to be used at normal TV receivers.

The invention relates particularly to a method for the recycle of the used mobile phones capable of data communication and the interactive digital radio and television services provided against fee payment by the use of said method and, in case the relevant services are provided, to the set-top boxes that enable the use of the asymmetric (receiving speed being higher than the transmitting speed) wide band internet access and the internet phone services.

### Background Art

The electronic systems used at present are classified into two, "analog" and "digital". In said analog systems, the electrical signals continuously vary and may assume any value within certain limits. On the contrary, in the digital systems, the electrical signals are not transmitted as they are. Instead of these signals, the digits corresponding to the samplings performed at certain intervals on said signals.

In said electronic systems, the input and output signals are generally of the "analog" type. In order to process and transmit these signals digitally, the "Analog/Digital Converter" and the "Digital/Analog Converter" are used. With time, digital circuits have started to be used in place of the analog circuits and today, all the electronic systems have begun to be made digitalized.

With the very fast advances in the digital systems, the television systems have also been influenced by said developments and a fast transition to the digital television has started. On the other hand, since it is not possible to replace within a short time the millions of TV receivers currently in use, the devices called the set-top box have been developed at the first stage, in order to receive the digital broadcasts by means of the existing analog receivers, instead of replacing the existing receivers.

Today the television and radio services are not limited only to enable the user to watch and hear the broadcasts, and the user may also have the freedom to select the broadcast he/she wants to watch interactively, against a certain fee to be paid.

The digital television and radio services provided against a certain fee for use in the prior art include the charging when the broadcast program is watched (pay per view), film watching on request (video on demand), internet service to subscribers, banking transactions with the television, shopping over television and the similar services.

In case there is no cable network in the region where said television and radio services are provided, said services are broadcast over satellite or terrestrial television transmitters, and the interaction between the user and the service provider is enabled by means of devices comprising the modems that utilize the traditional (wired) phone lines.

In order to apply the said method realized by means of the devices comprising a modem, a cable connection is required between the device where the service provided and the phone socket of the house and when in this case the service is being used or when the system is sending report to the service provider, the phone line of the house is sometimes kept busy for long time periods.

Moreover, the users may remove the modem cable connected to said device comprising the modem, to delay the billing of the services they use. In order to eliminate these problems and difficulties, it is necessary to use a modem, which will operate on mobile phone system (GSM modem) instead of the traditional modem. However, the cost of such type of modems is at such a level to hinder their use in consumer electronic products under today's conditions, hence this condition raises an obstacle for such modems to be put into practice.

On the other hand, today's the mobile phone industry develops high technology products capable of fast data communication, but the lifetime of every new model remains limited to 2-4 years due to the rapidly growing market hosting a tough competition. Every year, hundred thousands of used phones are replaced with a new model, and the thousand tones of used phone become a more significant part of the environmental problems of the modern world.

As a result, the presence of the need of recycling of the used mobile phones and reusing of used mobile phones on the digital set-top boxes due to many advantages it provides and the insufficiency of the existing solutions have made it necessary to perform an improvement in the relevant technical field.

When the above mentioned set-top boxes and the developments regarding the digital broadcasts and all the previous technical documents are examined, there is not any such system encountered, where only an internal the mobile phone is used as the two-way data communication path, without the need to use modem on said set-top boxes and to apply any external cabling process.

### Brief Description of the Invention

The present invention relates to the reuse of the used mobile phones on the digital set-top boxes as a method, which fulfills a foresaid requirement, eliminates all the disadvantages and provides some additional advantages.

Based on the state of the background art, the object of the invention is to enable the integrated production of the digital set-top boxes with used mobile phones by means of a suitable connection, communication software and the mechanical design.

The object of the invention is to provide the integrated production of the digital set-top boxes with the used mobile phones in an economic way.

Another object of the invention is to enable the collection of the used phones from the users and the reuse of the same in a way that will prevent pollution in the nature.

Another object of the invention is to provide the data communication with the service provider, which provides the charged television services, by means of the mobile phone produced integrated with the system.

Another object of the invention is to provide the possibility to continuously update the authorizations for use pertaining to the services provided by means of the uninterrupted data communication enabled owing to said mobile phone.

Another object of the invention is to enable the content security to be increased for the purpose of preventing unauthorized use of the said services, owing to the continuous update of the authorizations for use pertaining to said services.

Based on the descriptions above, another object of the invention is to ensure a collaboration between the mobile phone manufacturers and the set-top box manufacturers so that they can provide the service of phone upgrade at a price lower than that of the new phone to their customers who wish to replace their old phones suitable for the needs of the set-top box producers.

Another object of the invention is to support the business yield of the mobile phone manufacturers by means of the transfer of the old mobile phones collected under the phone upgrade service to the set-top box manufacturer at a reasonable cost.

Still another object of the invention is to provide increase in visual quality by the use of the LCD (Liquid Crystal Display) of said used mobile phone on the front panel of the set-top box.

Still another object of the invention is to provide the reduction in manufacturing cost owing to the elimination of the need to use a separate display, by means of the LCD of said used mobile phone being used on the front panel of the set-top box.

Still another object of the invention is to enable the set-top box to communicate with the other devices in the house, for example, to enable the wireless transmission of the audio and video to the monitor, headphones and the speakers, in case the used mobile phone employed in the set-top box has the bluetooth unit. In this way, the said product will be enabled to attain a new feature without making any addition and any cost being accrued.

Still another object of the invention is to enable the mobile phone integrated with a suitable hardware and software design to provide the data stream in the other direction over the mobile phone's Internet connection, in case the service provider provides one-way Internet data stream over satellite or terrestrial transmitters.

Yet another object of the invention is to enable said set-top box to provide the user with asymmetric wide band Internet access service without the need for a wired connection, owing to the two-way data stream provided.

Yet another object of the invention is to enable said set-top box to provide Internet phone (VolP) services using the known methods and an additional software-hardware design, as a result of the wide band Internet connection provided.

Yet another object of the invention is to provide Internet access to the people living in small and distributed settlements where the wide band Internet service cannot be provided by other methods.

In order to achieve all the aforesaid advantages, which will also become apparent from the following detailed description, the present invention brings together many conveniences depending on its said features.

The structural and characteristic features and all the advantages of the invention will become clearer from the enclosed drawings and the following detailed description where reference is being made to said drawings, thus the evaluation must be based on these drawings and the detailed description.

### Description of the Drawings

In order to best understand the embodiment of the present invention and the advantages thereof together with the supplemental elements, it must be considered along with the drawings for which the description is provided herein below.

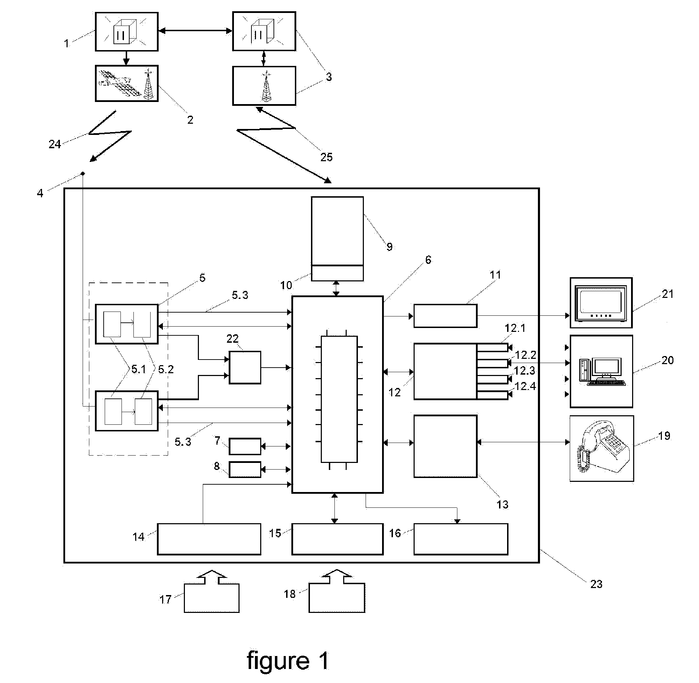

Figure 1 shows the block diagram of said set-top box where the used mobile phone integrated.

### Reference Numbers

**1.** Service provider
**2.** Satellite or terrestrial transmitters
**3.** Mobile communication network provider
**4.** Antenna (satellite dish or terrestrial television antenna)
**5.** Front-End
   **5.1** Tuner
   **5.2** Demodulator
   **5.3** MPEG Stream
**6.** CPU (Central Processing Unit)
**7.** Flash memory
**8.** Random access memory
**9.** Mobile phone
**10.** Bluetooth unit of mobile phone
**11.** AV (audio- video) output unit
**12.** Internet connection unit
   **12.1** USB
   **12.2** Ethernet
   **12.3** Wireless access unit
   **12.4** Bluetooth unit
**13.** Internet phone services interface (VOIP)
**14.** Front Panel (Local Keys and Remote Control interface)
**15.** Identification interface
**16.** Front panel display
**17.** Remote control unit
**18.** Smart or sim card
**19.** Standard Phone (in order to use VolP services)
**20.** User computer
**21.** Television
**22.** Media Access Control (Physical addressing) unit
**23.** Set-top box
**24.** TV services broadcast and one-way internet data stream (downstream)
**25.** Two-way data stream and upstream for internet access

### Detailed Description of the Invention

In the following detailed description, the method for the recycle of the used mobile phones in the digital top-set boxes is explained only to enable better understanding of the subject, without any restricting effect.

Prior to broadcasting, the television signals are subjected to numerous stages to be converted to digital form and added some other required data for the given services. Said set-top boxes (23) have been developed to receive the said digital television broadcast (24) using the existing analog televisions (21).

In the block diagram provided in Figure 1, the operating principle of said set-top box (23), the stages through which the received data is passed and the directions of communication between the central processing unit (6) comprising the processor and the other hardware are shown.

Said set-top box (23) is produced as integrated with the used mobile phone (9), and most importantly, in an economic manner, owing to a suitable connection, communication software and the mechanical design. Owing to the mobile phone (9) produced integral to said system, it is also made possible to continuously update the authorizations for use pertaining to the services provided by means of the data communication established with the service provider (1) providing the charged television services. LCD of said used mobile phone (9) is used as the front panel display (16) on the front panel of the set-top box.

In the block diagram shown in Figure 1, the modulated digital signals received from the input of said antenna (4) are transferred to the Front-end circuit (5) comprising Tuner (5.1) and Demodulator (5.2). In this circuit (5), the antenna (4) signal is amplified, filtered and demodulated. At the output of this circuit (5), demodulated digital signals are obtained called MPEG stream (5.3).

If the set top box is capable to receive more than one TV channel or Internet downstream is on the other carrier frequency than the transmitted TV signals, two front-end (5) circuits may be needed, otherwise, only one is sufficient.

MPEG stream (5.3) goes to the MPEG decoder which is a fast and powerful microprocessor also called CPU (Central Processing Unit) (6). CPU (6) must process all the incoming data (5.3) (MPEG stream), immediately as soon as the signal has arrived according to the operating software stored on a flash memory (7) and a random access memory (8) is used as the buffer memory.

The basic function of the CPU (6) is to decode MPEG stream (5.3) according to operation software. Incoming commands of the user by remote control unit (17) or front panel (14) keys, access rights defined by the service provider transmitted over broadcasting (24) and stored on Smart or SIM Card (18) and controlled / updated thru integrated mobile phone (9) control CPU functions. The signal at the output of said CPU (6) is transmitted to AV output unit (11), and from there to the television (21).

In case of the service provider (1) providing one-way Internet data stream (24) by means of satellite or terrestrial transmitters (2), by means of a suitable hardware and software, including a Media Access Control (Physical Addressing) unit (22) is connected with said CPU (6) and through the Internet connection of the mobile phone (9) integrated with said set-top box (23), the data stream (25) can be provided in the other direction over the mobile communication network provider (3). In this case, the set-top box (23) can provide the user with asymmetric wide band internet access service, without the need for a wired connection to an Internet service provider for the user computer (20) over the internet connection unit (12) integrated with said set-top box (23) which may be one or combination of the followings: USB interface (12.1), Ethernet interface (12.2), Wireless access unit (12.3) or Bluetooth unit (12.4).

As a result of said wide band Internet connection, said set-top box (23) may also be enabled to provide Internet phone services known under the name VOIP by means of said methods and additional software and hardware (13) design. Said Internet phone service (VOIP) may be immediately used by establishing connection with the standard phones (19) in use.

Said top-set box (23) comprises a front panel (14) to accept user commands by remote control (17) or local keys and it also comprises the subscriber identification interface (15) where the smart and sim cards (18) in use are read and processed.

Furthermore, said used mobile phone (9) used inside said set-top box (23) may comprise the bluetooth unit (10) and said set-top box (23) may be enabled to communicate with the other devices in the house, for example the wireless communication of the sound and the image may be provided to the monitor, headphones and speakers.

The protective scope of the present application is determined in the part of claims and the scope may by no means be limited to the description above provided only by way of example. It is obvious that a person skilled in the art may also provide the innovative step of the invention using the similar embodiments and/or applies this embodiment to other fields with similar purpose used in the relevant art. Consequently, such embodiments would obviously lack the criteria of innovative step and particularly, exceeding the known state of the art.

## Claims

1. The invention relates to the set-top boxes enabling us to receive the digital radio and television broadcasts (24) **characterized in that**,
- The required data communication between the set-top box (23) and the service provider (1) providing the charged television services, is realized by means of at least one used mobile phone (9) integrated with said box (23),
- said mobile phone (9) is used as the two-way data communication path of said top-set box (23)

2. A method according to claim 1 **characterized in that** in case of the said service provider (1) providing one-way internet data stream in the broadcasted signal (24) over satellite or terrestrial transmitters (2), the data stream is obtained in the other direction over the internet connection of said mobile phone (9) and thus two-way data stream is achieved.

3. A method according to claim 1 or 2 **characterized in that** said set-top box (23) provides the user with asymmetric wide band Internet access without the need for any wired connection.

4. A method according to any one of the preceding claims **characterized in that** as a result of said wide band internet connection being provided, said set-top box (23) may also provide internet phone services known under the name VoIP.

5. A method according to any one of the preceding claims **characterized in that** the wireless communication of said set-top box (23) with the other devices in the house is provided by means of a mobile phone (9) integrated with said set-top box (23), comprising the bluetooth unit (10).
